(19) Europäisches Patentamt
European Patent Office
Office européen des brevets

(11) Veröffentlichungsnummer : **0 083 689**
**B1**

(12) **EUROPÄISCHE PATENTSCHRIFT**

(45) Veröffentlichungstag der Patentschrift : **12.11.86**

(51) Int. Cl.⁴ : **G 01 B 11/00**, G 01 D 5/38

(21) Anmeldenummer : **82108827.5**

(22) Anmeldetag : **24.09.82**

(54) **Lichtelektrische inkrementale Längen- oder Winkelmesseinrichtung.**

(30) Priorität : **10.12.81 DE 3148910**

(43) Veröffentlichungstag der Anmeldung : **20.07.83 Patentblatt 83/29**

(45) Bekanntmachung des Hinweises auf die Patenterteilung : **12.11.86 Patentblatt 86/46**

(84) Benannte Vertragsstaaten : **AT CH FR GB IT LI NL SE**

(56) Entgegenhaltungen :
**DE-A- 1 448 504**
**DE-B- 2 826 213**
**DE-C- 2 510 273**
**US-A- 3 812 352**
**DISSERTATION DR. JÖRGE WILLHEM, T.U. HANNOVER 1978, "DREIGITTERSCHRITTGEBER", S. IV-X1, 33-41**

(73) Patentinhaber : **Dr. Johannes Heidenhain GmbH**
**Nansenstrasse 17**
**D-8225 Traunreut (DE)**

(72) Erfinder : **Nelle, Günther, Dr.-Ing.**
**Eichenweg 12**
**D-8221 Bergen (DE)**

**EP 0 083 689 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine lichtelektrische inkrementale Längen- oder Winkelmeßeinrichtung nach dem Oberbegriff des Anspruches 1.

Derartige Wegmeßeinrichtungen zur Bestimmung der Relativlage zweier Objekte sind in Auflicht- oder Durchlichtausführungen aus einer Vielzahl von Druckschriften bekannt. So ist es bekannt, daß bei der Abtastung von Maßverkörperungen inkrementaler Meßeinrichtungen der optimale Abstand der Abtasteinrichtung von der Gitterteilung der Maßverkörperung direkt von der gewählten Gitterkonstanten des Gitters der Meßteilung abhängt. Dieser optimale Abtastabstand unterliegt sehr engen Toleranzen, da die Größe des von den lichtempfindlichen Bauelementen gelieferten Abtastsignals direkt von der Intensität der bei Relativbewegungen der genannten Bauteile auftretenden Lichtmodulation, die sehr stark vom Abtastabstand beeinflußt wird, abhängt.

Bekannt ist, daß die Intensität der modulierten Abtastsignale am größten ist, wenn der Abtastabstand den Wert « 0 » hat, also das Abtastgitter und die Gitterteilung der Maßverkörperung in einer Ebene liegen. Denn nur dann ergibt sich eine genaue Überdeckung der jeweiligen Striche und Lücken der Gitter. Mit zunehmendem Abtastabstand verringert sich die Intensität der modulierten Abtastsignale.

Ein direktes Aufeinandergleiten von Abtastplatte und Maßstab ist aus Gründen der Beschädigungsgefahr nicht realisierbar. Das Zwischenschalten von optischen Elementen zur Abbildung eines Gitters auf dem anderen bedingt zumindest bei kleinen und mittleren Gitterkonstanten einen erhöhten Aufwand.

In der Praxis wird daher ein bestimmter, für die Gitterkonstante gegebener optimaler Abtastabstand mit sehr engen Toleranzen gewählt. Aus bekannten Gründen kommt es dabei zu Erhöhungen des Fotostromes bei den lichtempfindlichen Elementen wenn der Abtastabstand abnimmt, und umgekehrt zur Verringerung des Lichtstromes, wenn sich der Abtastabstand erhöht. Dies gilt, solange sich der Abstand nicht weit von « 0 » entfernt.

Eine derartige, durch Abstandsschwankungen verursachte Erhöhung und auch Verringerung des Fotostromes darf aber im Hinblick auf die notwendige Signalverstärkung nur in bestimmten engen Bereich erfolgen. Dies deshalb, weil die Verstärker in dieser speziellen Anwendung nur funktionssicher arbeiten, wenn die Eingangssignale einen bestimmten Mindestwert nicht unterschreiten und einen bestimmten Größtwert nicht überschreiten. Bei einer über den zulässigen Aussteuerungsbereich hinausgehenden Aussteuerung des Verstärkers wären Verzerrungen des Signals die Folge. Bei zu kleinen Signalen steigt die Störanfälligkeit.

Verschiedene Maßnahmen sind bekanntgeworden, um die vorgenannten Zusammenhänge von Abtastabstand und Lichtstrom bzw. Intensität der modulierten Abtastsignale in einer für lichtelektrische Meßeinrichtungen vorteilhaften Weise zu verändern.

Aus der US-PS-3 812 352 ist beispielsweise die Lehre zu entnehmen, den Abtastabstand nach der dort angegebenen Formel $Z_1 = nS_1S_2/\lambda$ zu ermitteln, wobei $Z_1$ der Abtastabstand, $S_1$ die Gitterkonstante des einen Gitters, $S_2$ die Gitterkonstante des zweiten Gitters, $\lambda$ die Lichtwellenlänge und n eine positive ganze Zahl ist. Wird dort $n = 1$ gewählt, so sind für die dort angegebenen Gitterkonstanten die dort in Figur 5 und 6 gezeigten Zusammenhänge zwischen Fotostrom und Abtastabstand zu erzielen. Dieses Verfahren mit Gittern unterschiedlicher Gitterkonstanten ist jedoch nur für die dort vorliegenden Verhältnisse anwendbar, d. h. nur für Meßeinrichtungen, die im Durchlichtverfahren arbeiten und für feine Gitterkonstanten (z. B. 25 µm). Wenn die Gitterkonstanten beider Gitter gleich sind, wird dort noch als Sonderfall $S1 \triangleq S2$ die Formel $Z1 = nS1^2/\lambda$ angegeben. Dabei haben die Gitter jeweils gleiche Strich- und Lückenbreite.

Eine weitere Lehre zur Erzielung günstiger Bedingungen für die Abtastungstoleranzen ist in der DE-PS-25 10 273 angegeben. Das dort vorgeschlagene Vignettieren der lichtempfindlichen Bauelemente führt zum gewünschten Erfolg, jedoch nur bei Gitterkonstanten die größer als 100 µm sind, und bei Meßsystemen, die — wie dort angegeben — im Auflichtverfahren arbeiten.

Diese Lehren sind jedoch praktisch nicht anwendbar bei Meßeinrichtungen, die für mittlere Gitterkonstanten zwischen 25 µm und 100 µm ausgelegt sind, und entweder als Auflicht- oder als Durchlichtmeßeinrichtungen konzipiert sind.

Der Erfindung liegt die Aufgabe zugrunde, eine Meßeinrichtung des Auflicht- oder des Durchlichttypes mit mittlerer Gitterkonstanten zu schaffen, bei der trotz einfacher Bauweise größere Schwankungen des Abtastabstandes zwischen Meßteilung und Abtastplatte zulässig sind.

Diese Aufgabe wird durch die im Kennzeichen des Anspruches 1 angegebenen Merkmale gelöst.

Vorteilhafte Ausgestaltungen der Erfindung sind in den Unteransprüchen angegeben.

Die besonderen Vorteile der Erfindung sind die größeren Abtastabstandstoleranzen, die zugelassen werden können, weil durch die vorgenannten Maßnahmen bei einem mittleren Abstand von $a = (0{,}05\text{-}0{,}1)\, g^2/\lambda$ ein ausgeprägtes Maximum der Intensität der modulierten Abtastsignale vorhanden ist, das sich sowohl bei Verkleinerung des Abtastabstandes als auch bei Vergrößerung des Abtastabstandes verringert, wogegen beim relevanten Stand der Technik das Maximum der Intensität der Abtastsignale beim Abtastabstand « 0 » liegt und mit zunehmendem Abtastabstand ständig kleiner wird.

Anhand der Figuren werden Ausführungsbeispiele erläutert.

Es zeigt

Figur 1 schematisch Beleuchtung, Maßverkörperung, Abtastplatte und lichtempfindliches Element einer Meßeinrichtung des Durchlichttyps,

Figur 2 eine ähnliche Anordnung wie in Figur 1 eines Meßgerätes des Auflichttyps,

Figur 3 eine diagrammartige Gegenüberstellung der Abhängigkeiten des Lichtstromes vom Abtastabstand bei verschiedenen Gitterbedingungen,

Figur 4 den typischen Verlauf der Lichtintensität hinter einem Gittermaßstab in verschiedenen Abständen.

Die in Figur 1 schematisch dargestellten Elemente wie Beleuchtung L, Maßverkörperung M mit Meßteilung M', Abtastplatte A mit Abtastgittern A', A'', und lichtempfindliche Elemente P sind Bestandteil einer allgemein bekannten, nicht näher dargestellten inkrementalen Wegmeßeinrichtung, die nach dem Durchlichtprinzip arbeitet. Bei Relativverschiebungen zwischen der Maßverkörperung M und der Abtastplatte A wird der durch die Gitter M', A', A'' hindurchtretende Lichtstrom in bekannter Weise moduliert, was zu einem dreieckförmigen Spannungsverlauf am Ausgang der Photoelemente P führt, wenn die Meßteilung M' und die Abtastgitter A', A'' die gleiche Gitterkonstante g und das gleiche Strich-Lückeverhältnis aufweisen und der Abtastabstand « 0 » ist. In der Praxis wird ein angenähert sinusförmiger Spannungsverlauf, der sich im allgemeinen bei Abtastabständen größer als « 0 » ergibt, angestrebt.

Durch den Phasenversatz der Abtastgitter A' und A'' kann die Richtung der Relativbewegung bestimmt werden. Bei derartigen Anordnungen wird üblicherweise das der Beleuchtung L nächstliegende Gitter als Eingangsgitter und das den Photoelementen P nächstliegende Gitter als Ausgangsgitter bezeichnet.

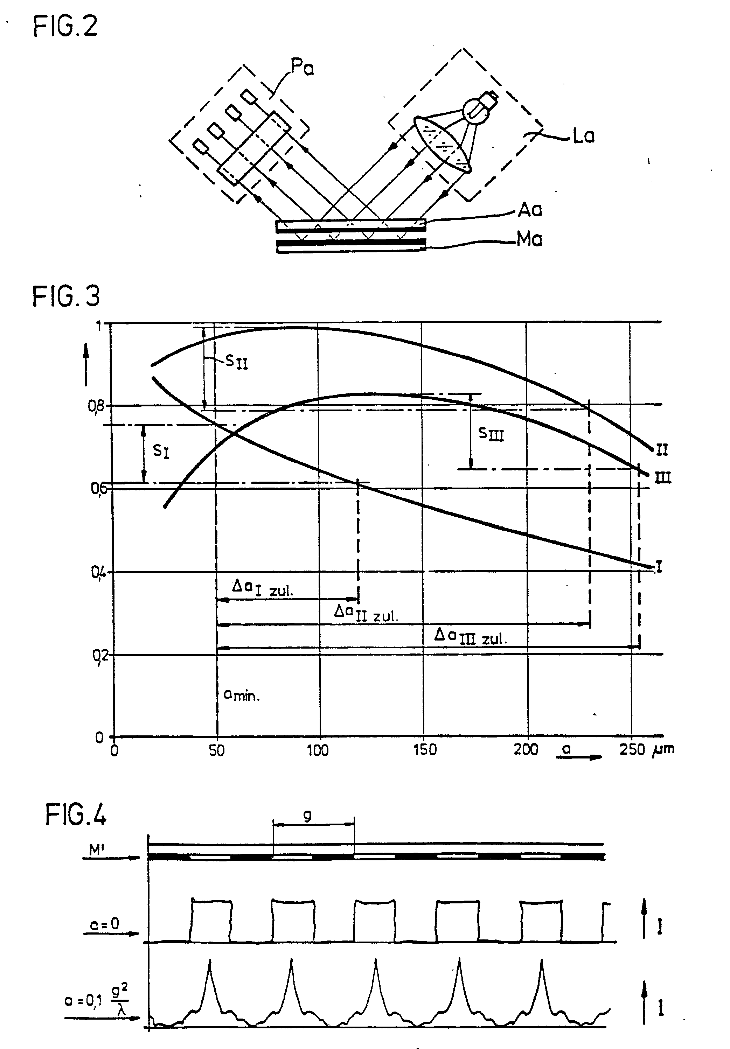

In Figur 2 ist sinngemäß eine Wegmeßeinrichtung für das Auflichtverfahren dargestellt. Von einer Beleuchtungseinrichtung $L_a$ trifft der Beleuchtungsstrahlengang durch eine Abtastplatte $A_a$ auf eine als Reflexionsgitter ausgebildete Maßverkörperung $M_a$. Von den reflektierenden Strichen wird das Licht im entsprechenden Winkel durch die Lücken im Gitter der Abtastplatte $A_a$ zurückgeworfen und trifft auf Photoelemente $P_a$, die eine dem modulierten Lichtstrom entsprechende Ausgangsspannung erzeugen. Es ist erkennbar, daß aufgrund des erfindungsgemäß veränderten Strich-Lückenverhältnisses bei der Abtastplatte $A_a$ mehr Licht zu den Photoelementen $P_a$ zurückgeworfen werden kann, was beim Justieren der Abtastplatte $A_a$ zur Maßverkörperung $M_a$ größere Toleranzen zuläßt. Bei genauem Justieren der Abtastplatte $A_a$ zur Maßverkörperung $M_a$ kann mit den erfindungsgemäßen Maßnahmen die Signalamplitude der Abtastsignale in bestimmten Abtastabständen erhöht werden.

Figur 3 zeigt eine Gegenüberstellung des Verlaufs I der Signalamplitude am Ausgang der Photoelemente in Abhängigkeit vom Abtastabstand bei herkömmlicher Ausgestaltung der Meßeinrichtung und zwei Kurven II und III der Signalamplitude bei verschiedener Ausgestaltung der Meßeinrichtung gemäß der Erfindung. Aus Kurve I ist ersichtlich, daß in der Nähe des Abtastabstandes « 0 » der von den Photoelementen erzeugte Strom sein Maximum hat, und daß der von den Photoelementen erzeugte Strom mit zunehmendem Abtastabstand immer weiter absinkt. Bei einem gegebenen Aussteuerbereich S (Maximum — 20 %) kann der Abtastabstand a lediglich in einem bestimmten Maße vergrößert werden, bis der von den Photoelementen erzeugte Strom unter die untere Aussteuergrenze absinkt. Eine Verringerung des Abstandes hätte eine Erhöhung des besagten Stromes zur Folge, was zu den eingangs geschilderten Verzerrungen des Abtastsignales infolge von übersteuerten Verstärkern führen würde.

Bei den in Figur 3 dargestellten Kurven ist davon ausgegangen worden, daß ein minimaler Abtastabstand a von 50 µm nicht unterschritten werden soll, da eine weitere Verringerung wegen der zunehmenden Beschädigungsgefahr durch Staubteilchen nicht praxisgerecht wäre. Der Abtastabstand von 50 µm stellt daher die untere Toleranzgrenze $a_{min}$ für den Abtastabstand dar. Der Toleranzbereich ergibt sich nun aus dem jeweiligen Kurvenverlauf I, II oder III, in den der Aussteuerbereich S (jeweils Signalmaximum abzüglich 20 %) eingezeichnet ist.

Ohne weiteres ist erkennbar, daß die durch die Anwendung der Erfindung erzeugten Kurven II und III eine wesentlich höhere Abtastabstandstoleranz $\Delta a_{zul.}$ zulassen, als bei lichtelektrischen Meßeinrichtungen dieser Kategorie sonst möglich ist.

Bei der Kurve II hat bei den Gittern A', A'' der Abtastplatte A ein Verhältnis von lichtundurchlässigem Strich $G_s$ (Dunkelfeldbreite) zu Gitterkonstante g von 1 : 4 vorgelegen, d. h. das Verhältnis von lichtundurchlässigem Strich $G_S$ zu lichtdurchlässigem Strich $G_L$ (Hellfeldbreite) ist 1 : 3. Das Verhältnis von Dunkelfeldbreite zu Hellfeldbreite bei der Meßteilung M' hingegen ist 1 : 1.

Für die Kurve III liegt das Dunkelfeld-/Hellfeldbreitenverhältnis bei 1 : 7 an den Abtastgittern A', A'' und bei 1 : 1 an der Meßteilung M'.

Es ist erkennbar, daß mit Vergrößerung des Dunkelfeld-/Hellfeldbreitenverhältnisses die zulässige Abtastabstandstoleranz $\Delta a_{zul.}$ vergrößert werden kann, dies jedoch negativen Einfluß auf die absolute Signalamplitude hat.

Der Fachmann wird die ihm durch die Erfindung gegebene Lehre den Erfordernissen entsprechend anpassen.

Figur 4 zeigt den Intensitätsverlauf I hinter mit parallelem Licht der Wellenlänge λ beleuchtetem Gittermaßstab mit der Gitterkonstante g, einmal bei dem Abtastabstand a = 0 und in der nächsten Zeile bei dem Abstand $a = 0{,}1\ g^2/\lambda$. Direkt in der Gitterebene ist die Intensität entsprechend dem Gitter rechteckförmig verteilt, während bei einem Abstand von etwa 0,1 $g^2/\lambda$ schmale Intensitätsspitzen entstehen. Wird dieses Gitter in diesem Abstand mit einem zweiten Gitter mit gleicher Gitterkonstanten aber nur so breiten lichtundurchlässigen Strichen, wie die Intensitätsspitzen breit sind, abgetastet, so entstehen bei Relativbewegungen dieser Gitter zueinander Hell-Dunkel-Modulationen, deren Amplitude bei diesem Abstand ein Maximum hat und sich sowohl bei Verkleinerung als auch bei Vergrößerung des Abstandes verringert. Bei gleicher zulässiger relativer Änderung dieser Amplituden kann so eine größere Abstandsänderung zwischen Abtastplatte und Maßstab zugelassen werden als bei den üblichen Abtastplattenausführungen, wo das Maximum der Modulations-Amplituden beim Abstand 0 zwischen Abtastplatte und Maßstab liegt.

Bei einfachen Auflichtsystemen, bei denen der Maßstab durch dasselbe Gitter sowohl beleuchtet als auch abgetastet wird, kommt ein weiterer Vorteil hinzu. Wegen der schmalen Striche sind die Lücken auf dem Abtastgitter entsprechend größer und lassen mehr Licht zum Maßstab gelangen. Dadurch kann die Amplitude des ausgewerteten Signales erhöht werden.

## Patentansprüche

1. Lichtelektrische inkrementale Längen- oder Winkelmeßeinrichtung mit einer paralleles Licht der Wellenlänge (λ) aussendenden Beleuchtung (L) und einer nach Art eines Beugungsgitters mit bestimmter Gitterkonstanten (g) ausgebildeten Meßteilung (M'), einer ein oder mehrere zueinander phasenverschobene Beugungsgitter (A', A") der vorgenannten Gitterkonstante (g) aufweisenden Abtastplatte (A), die in einem Abstand $a = k \cdot g^2/\lambda$ entlang der Meßteilung (M') verschiebbar ist, dadurch gekennzeichnet, daß k eine Zahl zwischen 0 und 0,3 ist, und bei dem der Beleuchtung (L ; La) abgewandten Beugungsgitter (A', A" ; Aa) das Verhältnis der Breite eines lichtdurchlässigen Gitterstriches ($G_L$) zur Breite eines lichtundurchlässigen Gitterstriches ($G_S$) größer als 2 : 1 ist.

2. Längen- oder Winkelmeßeinrichtung nach Anspruch 1, dadurch gekennzeichnet, daß das Verhältnis der Breite eines lichtdurchlässigen Gitterstriches ($G_L$) zur Breite eines lichtundurchlässigen Gitterstriches ($G_S$) 3 : 1 ist.

3. Inkrementale, im Durchlichtverfahren arbeitende Längen- oder Winkelmeßeinrichtung nach Anspruch 1, dadurch gekennzeichnet, daß das der Beleuchtung (L) zugewandte Eingangsgitter (M') ein Verhältnis von lichtdurchlässigen zu lichtundurchlässigen Gitterstrichen von 1 : 1 aufweist, und das bei dem dem Eingangsgitter (M') nachgeordneten Ausgangsgitter (A', A") das Verhältnis von lichtdurchlässigen zu lichtundurchlässigen Gitterstrichen 3 : 1 ist.

4. Inkrementale, im Auflichtverfahren arbeitende Längen- oder Winkelmeßeinrichtung nach Anspruch 1, dadurch gekennzeichnet, daß das Gitter (A', A") der Abtastplatte ($A_a$) ein Verhältnis von lichtdurchlässigen zu lichtundurchlässigen Gitterstrichen von 3 : 1 aufweist, und daß die als Reflexionsgitter ausgebildete Meßteilung ($M_a$) bei den reflektierenden und den absorbierenden Strichen ein Verhältnis von 1 : 1 aufweist.

## Claims

1. Photoelectric incremental length or angle measuring device, having an illumination system (L) emitting parallel light of the wavelength (λ) and a graduated scale (M') constructed in the manner of a diffraction grating with a particular grating constant (g), and a scanning plate (A), which exhibits one or more mutually phase-displaced diffraction gratings (A', A") of the said grating constant (g) and which is displaceable at a spacing $a = k \cdot g^2/\lambda$ along the graduated scale (M'), characterized in that k is a number between 0 and 0.3, and at the diffraction grating (A', A" ; Aa) remote from the illumination system (L ; La) the ratio of the width of a transparent grating line ($G_L$) to the width of an opaque grating line ($G_S$) is greater than 2 : 1.

2. Length or angle measuring device according to Claim 1, characterized in that the ratio of the width of a transparent grating line ($G_L$) to the width of an opaque grating line ($G_S$) is 3 : 1.

3. Incremental length or angle measuring device, operating in a transmitted light process, according to Claim 1, characterized in that the entrance grating (M') facing the illumination system (L) has a ratio of transparent to opaque grating lines of 1 : 1, and in that at the exit grating (A', A") disposed behind the entrance grating (M') the ratio of transparent to opaque grating lines is 3 : 1.

4. Incremental length or angle measuring device, operating in a reflected light process, according to Claim 1, characterized in that the grating (A', A") of the scanning plate ($A_a$) has a ratio of transparent to opaque grating lines of 3 : 1, and in that the graduated scale ($M_a$) constructed as a reflection grating has a ratio of 1 : 1 of reflecting and absorbing lines.

## Revendications

1. Appareil photoélectrique de mesure incrémentale de longueurs ou d'angles, avec un éclairage (L) émettant une lumière parallèle de longueur d'onde (λ) et une graduation de mesure (M') constituée à la façon d'un réseau de diffraction, avec une constante de réseau (g) déterminée, une plaque d'exploration (A) présentant un ou plusieurs réseaux de diffraction (A', A") déphasés entre eux, ayant la constante de réseau (g) susmentionnée et pouvant être déplacée le long de la graduation de mesure (M') à une distance $a = k \cdot g^2/\lambda$, caractérisé par le fait que k est un nombre compris entre 0 et 0,3 et que, pour le réseau de diffraction (A', A" ; Aa) éloigné de l'éclairage (L ; La), le rapport de la largeur d'un trait transparent ($G_L$) du réseau à la largeur d'un trait opaque ($G_S$) du réseau est supérieur à 2 : 1.

2. Appareil de mesure de longueurs ou d'angles selon la revendication 1, caractérisé par le fait que le rapport de la largeur d'un trait transparent ($G_L$) du réseau à la longueur d'un trait opaque ($G_S$) du réseau est de 3 : 1.

3. Appareil de mesure incrémentale de longueurs ou d'angles travaillant en lumière transmise, selon la revendication 1, caractérisé par le fait que le réseau d'entrée (M') tourné vers l'éclairage (L) présente un rapport des traits transparents aux traits opaques égal à 1 : 1 et que, pour le réseau de sortie (A', A") faisant suite au réseau d'entrée (M'), le rapport des traits transparents aux traits opaques du réseau est de 3 : 1.

4. Appareil de mesure incrémentale de longueurs ou d'angles, travaillant en lumière réfléchie, selon la revendication 1, caractérisé par le fait que le réseau (A', A") de la plaque d'exploration ($A_a$) présente un rapport des traits transparents aux traits opaques égal à 3 : 1, et que la graduation de mesure ($M_a$) constituée comme réseau de réflexion présente, pour les traits réfléchissants et les traits absorbants, un rapport de 1 : 1.

FIG. 1

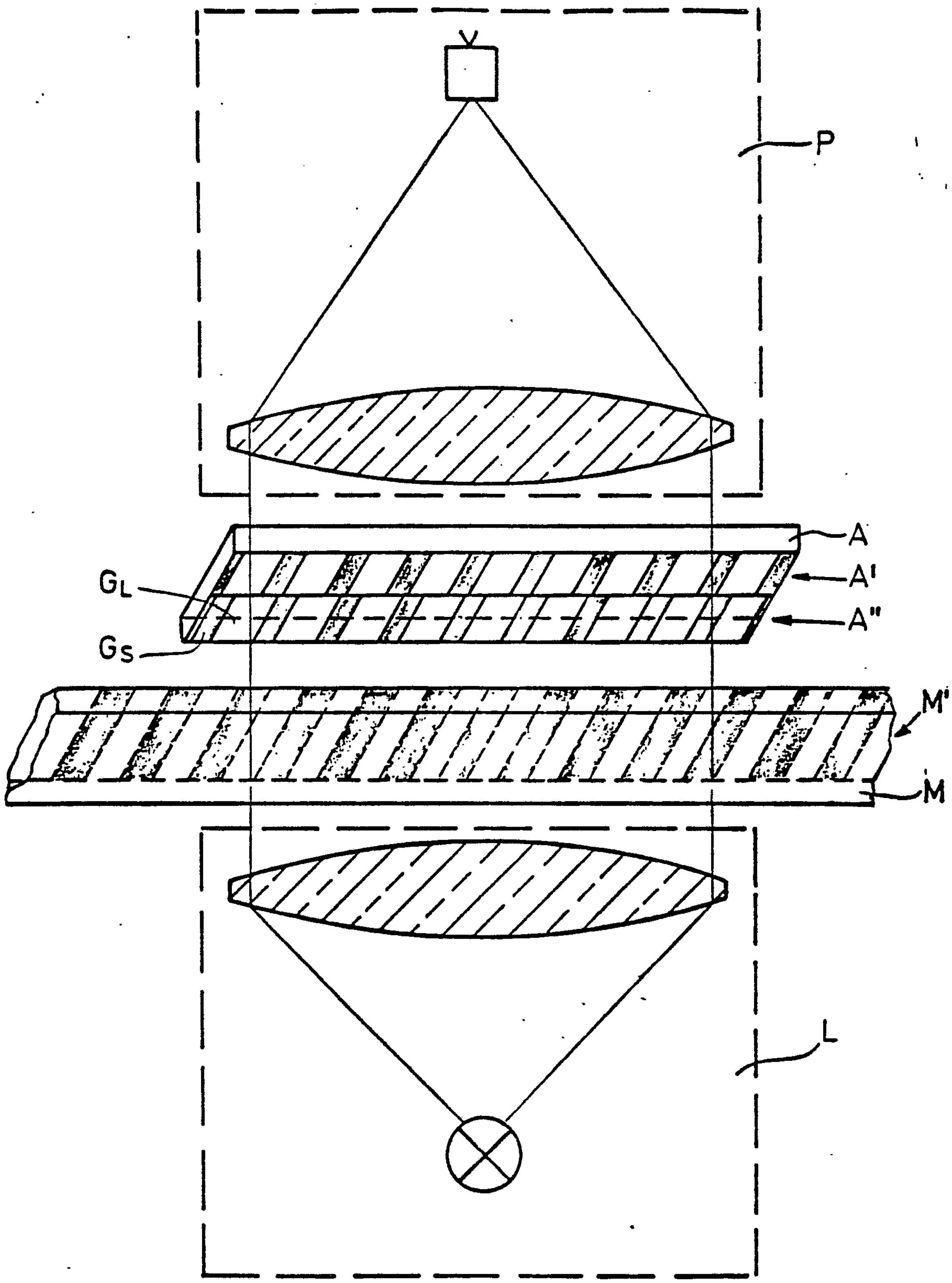

FIG. 2

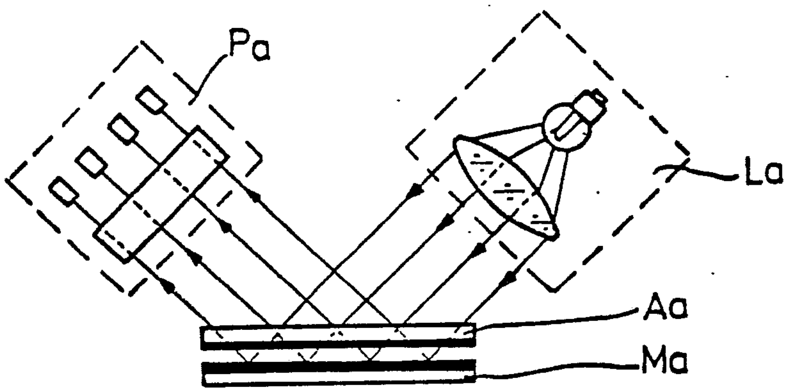


FIG. 3

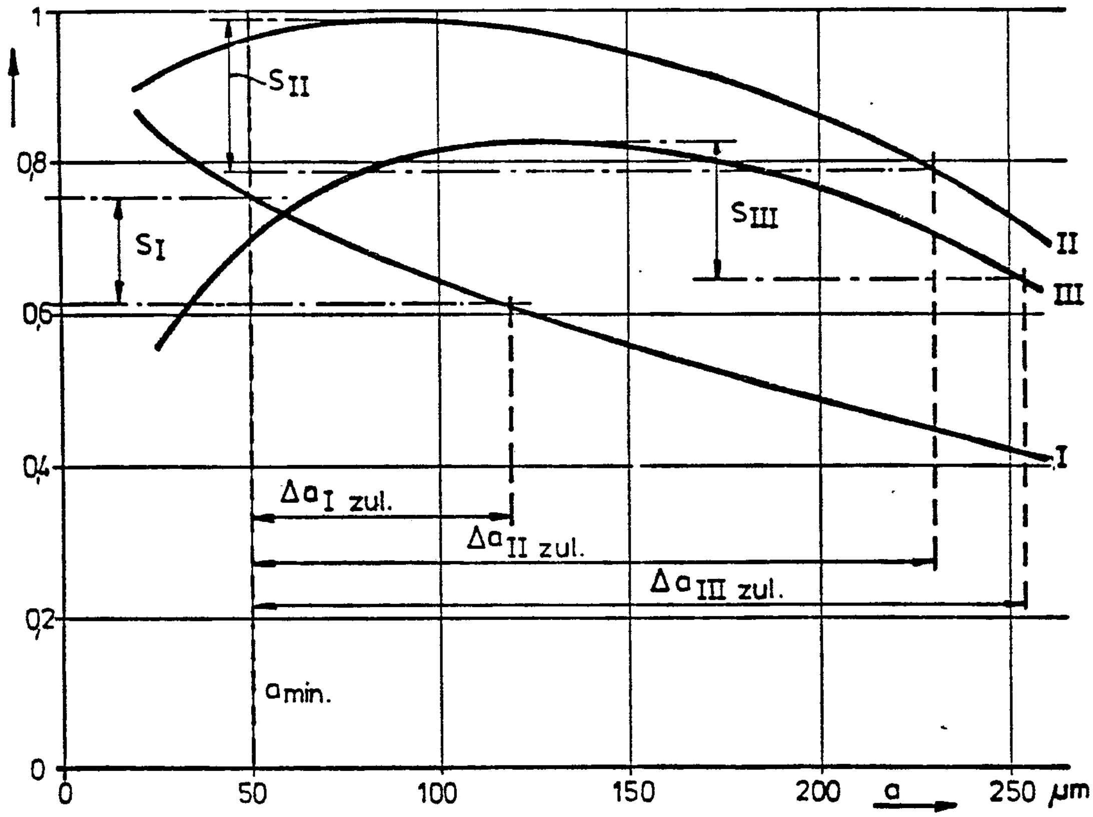


FIG. 4